# FASCICULE DE BREVET EUROPEEN

(11) **EP 1 295 030 B1**
(45) Date de publication et mention de la délivrance du brevet: **28.12.2005**
(21) Numéro de dépôt: 01956489.7
(22) Date de dépôt: 20.06.2001
(51) Int. Cl.: F02P 5/15, F02D 41/02

(54) **PROCEDE DE PROTECTION EN TEMPERATURE POUR TUBULURE D'ECHAPPEMENT DE MOTEUR D'AUTOMOBILE**
SCHUTZ EINES ABGASROHRS EINES AUTOMOTORS VOR ÜBERHITZUNG
TEMPERATURE PROTECTION METHOD FOR MOTOR VEHICLE ENGINE EXHAUST PIPE

(30) Priorité: 29.06.2000 FR 0008376
(43) Date de publication de la demande: 26.03.2003
(73) Titulaire: SIEMENS AUTOMOTIVE S.A., 31036 Toulouse Cédex (FR)
(72) Inventeur: GALTIER, Frédéric, F-34070 Montpellier (FR)
(86) Numéro de dépôt international: PCT/EP2001/006959
(87) Numéro de publication internationale: WO 2002/001070

(56) Documents cités:
- EP-A- 0 890 716
- DE-A- 4 406 982
- GB-A- 2 279 111
- PATENT ABSTRACTS OF JAPAN vol. 016, no. 474 (M-1319), 2 octobre 1992 (1992-10-02) & JP 04 171242 A (MITSUBISHI MOTORS CORP), 18 juin 1992 (1992-06-18)

## Description

L'invention concerne le domaine général du contrôle d'allumage de moteurs d'automobile. Elle touche plus particulièrement la protection des tubulures d'échappement, sensibles aux surchauffes.

La plupart des véhicules automobiles modernes utilisent, pour la réduction des émissions polluantes, des systèmes d'échappement de type dit catalytique, qui reçoivent les gaz chauds émanant du moteur par la tubulure d'échappement.

Ces systèmes catalytiques sont particulièrement sensibles aux fortes surchauffes, qui détruisent les propriétés chimiques des catalyseurs.

Or il se trouve que, pour les phases de fonctionnement du moteur pendant lesquelles on souhaite une production de puissance nulle, on passe d'un angle d'avance (noté souvent IGA, de l'anglais "Ignition Angle") à l'allumage nominal à un angle d'avance minimal (qui se rapproche du régime calé) et on cherche donc à régler l'instant d'allumage juste assez tôt pour provoquer la combustion du mélange air-essence dans les pistons, mais avec une combustion légèrement décalée dans le temps (par rapport au fonctionnement normal), qui ne produit aucune puissance.

Cette combustion retardée provoque une forte dissipation de chaleur dans la tubulure d'échappement. Il est alors indispensable de s'assurer que la température atteinte TEG ("Température of Exhaust Gas") ne puisse en aucun cas atteindre une limite qui provoquerait la destruction du catalyseur.

On connaît des procédés de contrôle de température de tubulure d'échappement, qui utilisent la mesure en temps réel de la température en un point de la tubulure, et l'injection éventuelle d'essence en surplus dans le mélange introduit dans les pistons, cette essence imbrûlée (car en excès dans le mélange), étant uniquement destinée à refroidir la tubulure d'échappement.

Un tel système est, comme on le comprend, très peu économe en carburant, et des dispositifs ont été proposés pour réinjecter le mélange en sortie de système catalytique dans le carburateur, en vue de réduire cette perte de carburant imbrûlé. Il est clair que ces dispositifs sont à la fois complexes, difficiles à régler et onéreux.

De façon générale, la protection en température de la tubulure d'échappement est également obtenue en gardant une marge entre l'angle d'avance minimal auquel le moteur est réglé, et l'angle d'avance correspondant au régime calé. De cette manière, on réduit la dissipation de chaleur dans la tubulure, et donc on obtient une protection en température. Cependant, il est clair que cette solution est peu satisfaisante, dans la mesure où elle maintient une certaine production de puissance par le moteur.

La présente invention propose donc un nouveau procédé de protection en température de tubulure d'échappement.

Suivant l'invention, le procédé de protection en température pour tubulure d'échappement de moteur d'automobile comporte des étapes de détermination d'un angle minimum d'avance à l'allumage parmi plusieurs valeurs possibles comprenant un angle de régime calé, en fonction d'une logique prédéterminée et de paramètres de fonctionnement du moteur.

Préférentiellement, l'angle minimal d'allumage peut être réglé jusqu'au régime calé, pendant des périodes de temps pour lesquelles certains paramètres moteurs restent compris dans une plage de valeurs déterminée.

La description et les dessins qui suivent permettront de mieux comprendre les buts et avantages de l'invention. Il est clair que cette description n'est donnée qu'à titre d'exemple, et n'a pas de caractère limitatif.

Dans les dessins :
- la figure 1 illustre la puissance produite par un moteur à pistons selon le réglage d'avance à l'allumage;
- la figure 2 montre un organigramme simplifié du procédé selon l'invention;
- la figure 3 illustre un exemple de variation dans le temps de l'angle d'avance à l'allumage en l'absence d'hystérésis;
- la figure 4 illustre, de la même manière, un exemple de variation dans le temps de l'angle d'avance à l'allumage, en présence d'hystérésis.

L'invention trouve sa place dans le cadre d'un moteur automobile de type classique, à pistons et tubulure d'échappement atmosphérique. Ces éléments en tant que tel ne font pas partie de la présente invention, et sont considérés connus de l'homme du métier.

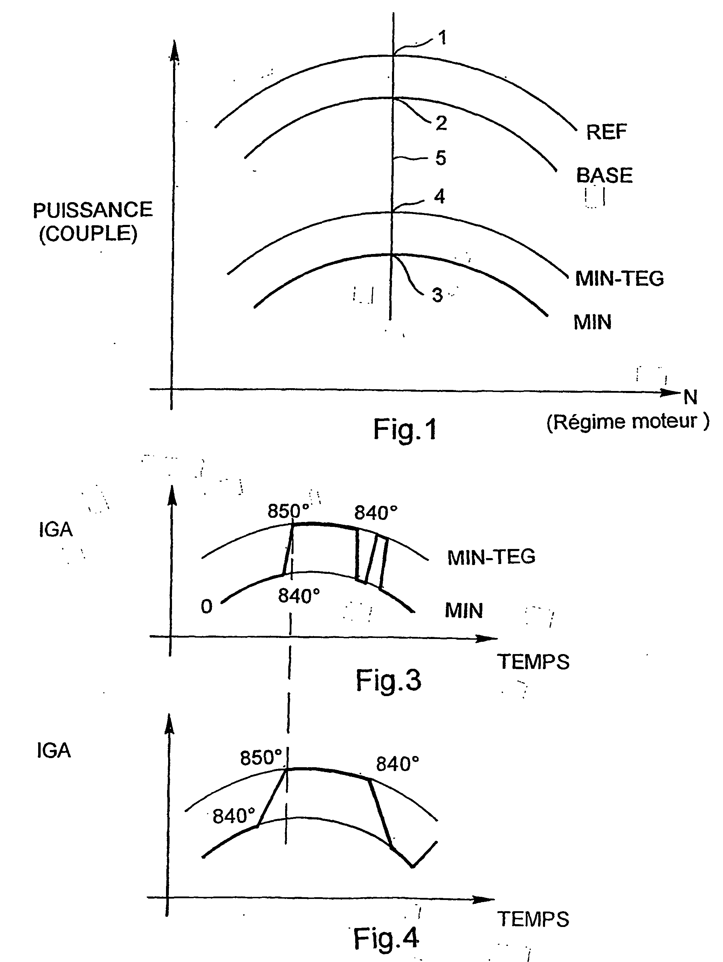

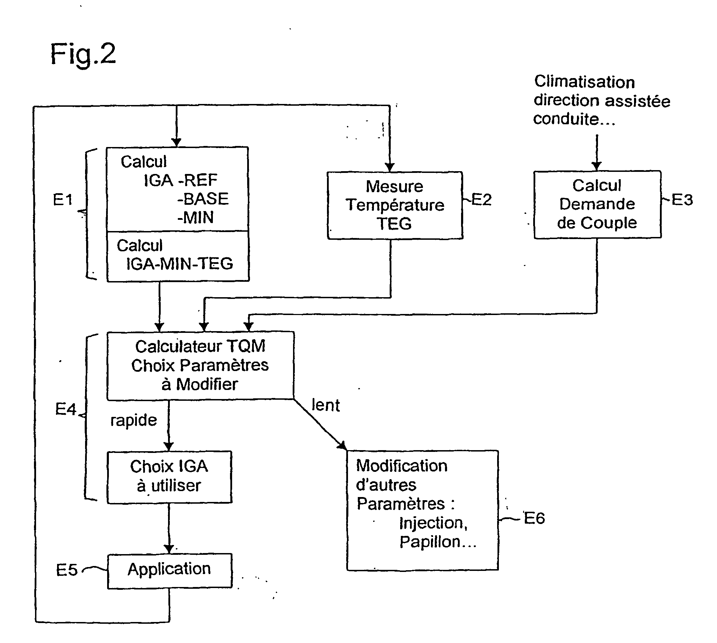

La figure 1 montre diverses courbes de puissance en fonction du régime N d'un moteur, chaque courbe correspondant à un réglage différent de l'angle d'avance à l'allumage. On rappelle simplement ici, en utilisant la figure 1 à titre de support, que lors de la conduite du véhicule, lorsque le conducteur accélère, le moteur est réglé de façon à fournir une production de puissance maximale, ce qui correspond à un premier réglage d'avance à l'allumage IGA_REF dit angle de cliquetis (point 1, sur la courbe notée REF, qui est la courbe de couple maximal produit par le moteur). Ce réglage, optimal du point de vue production de puissance moteur, provoque un cliquetis du moteur qui entraîne son usure prématurée, et dans la pratique le réglage de l'avance à l'allumage se fait selon un second angle IGA_BASE (point 2, sur la courbe notée BASE), dit angle nominal, qui est donc en léger recul par rapport à l'angle de cliquetis.

A un instant donné, l'angle réellement choisi (point 5) est souvent inférieur à la valeur nominale, et dépend naturellement de la demande totale couple moteur par l'accélérateur, la climatisation, la direction assistée etc..

Par contre, lorsque le conducteur lève le pied de l'accélérateur pour ralentir ou changer de vitesse, l'avance à l'allumage est modifiée et est généralement dans l'art antérieur ramenée à une valeur d'angle minimal pratique IGA_MIN_TEG (point 4 sur une courbe dite MIN-TEG de l'anglais "Temperature of Exhaust Gas"), pour laquelle il demeure une production de puissance, sans avoir de risques excessifs de température TEG élevée dans la tubulure. Cette courbe était dans la pratique maintenue très au dessus de la courbe d'angle calé, de manière à garder une large marge de sécurité.

Dans la présente invention, on propose de ramener au moins à certaines périodes l'angle d'avance à l'allumage à une troisième valeur dite angle calé IGA_MIN (régime moteur sans aucune production de puissance, point 3, sur la courbe notée MIN). Pour cette valeur d'angle, la production de couple moteur est minimale, et le moteur tourne seulement parce qu'il est entraîné par le mouvement du véhicule. Cet angle permet seulement d'assurer que le mélange air-essence est brûlé à l'intérieur du piston.

La présente invention utilise donc l'angle de cliquetis, l'angle nominal et l'angle calé, et le procédé consiste à choisir à chaque instant (ou au moins de façon itérative) un de ces angles selon les paramètres de conduite et les paramètres de fonctionnement du véhicule (moteur, tubulure etc.).

On comprend que dans le principe, le procédé consiste à ramener l'angle d'avance à l'allumage IGA à un point sur la courbe MIN, pendant une période qui dure aussi longtemps que la température TEG mesurée ou modélisée en entrée de la tubulure d'échappement ou du catalyseur ne dépasse pas un seuil donné. Dès lors que la température mesurée est supérieure à une certaine valeur seuil, l'angle d'avance à l'allumage IGA est à nouveau modifié pour réduire la production de chaleur. On revient alors à une valeur d'angle IGA placée sur une courbe MIN TEG intermédiaire entre la courbe angle calé et la courbe nominale.

Comme on le voit sur la figure 2, selon le procédé, on calcule dans une première étape E1 les valeurs des angles d'avance à l'allumage correspondant aux courbes REF, BASE et MIN selon les paramètres de fonctionnement du moteur à cet instant.

On calcule également dans cette étape E1 une valeur d'angle d'avance à l'allumage MIN_TEG qui tient compte de la température réellement mesurée ou modélisée en entrée du catalyseur (ou en un autre point sensible d'ailleurs). Cette valeur dépend des conditions observées dans le moteur et l'environnement à un instant donné, et n'est pas nécessairement fixée initialement de façon définitive.

Avantageusement, comme cela sera expliqué plus en détail par la suite, cette valeur est adaptée en fonction du gradient de la température TEG observé lorsque cette avance à l'allumage est employée.

Dans une seconde étape E2, menée en parallèle avec l'étape E1, on modélise ou on mesure la température dans la tubulure.

Dans une troisième étape E3, également menée simultanément avec les étapes E1 et E2, on détermine la demande de couple instantanée. Cette valeur de couple demandé dépend en particulier de l'état en fonctionnement ou non de certains organes du véhicule, tels que la climatisation, ou la direction assistée, la position de pédale d'accélération, la vitesse enclenchée etc.

Sur la base de ces informations et paramètres, on choisit, dans une étape E4, la valeur minimale d'angle d'avance à l'allumage utilisable à cet instant, et cette valeur est appliquée au fonctionnement du moteur dans une étape E5.

Il est clair que, simultanément à la modification de cette valeur d'avance à l'allumage, les valeurs de réglage d'injection et papillon (lesquelles comportent également chacune des valeurs maximale REF, nominale BASE et minimale MIN) sont également modifiées pour atteindre le couple désiré (étape E6).

Cependant, la modification de la valeur d'avance à l'allumage est réalisable très rapidement et produit un effet très rapide sur le couple moteur, comparativement au réglage d'injection ou de papillon d'admission d'air, qui sont donc des paramètres de réglage lent.

Le module de coordination de réserve de couple et le module de profil de variation de couple (par exemple lors de changement de vitesse) utilisent tous deux à la fois le calcul d'angle minimum d'avance et le calcul d'angle minimum prenant en compte la température de tubulure pour déterminer quels paramètres moteurs doivent être modifiés selon la demande de couple actuelle et prévue (en particulier durée de réduction de couple prévue).

Par exemple pendant une décélération, le calculateur TQM (de l'anglais "Torque Management system") de contrôle de couple peut régler l'allumage à la valeur minimale. Si cette phase de décélération se prolonge, et si l'angle minimal (IGA_MIN, courbe MIN sur la figure 1) est inférieur à l'angle d'avance prenant en compte la température des gaz (IGA_MIN_TEG, courbe MIN_TEG sur la figure 1), le calculateur TQM décidera de limiter la réduction d'avance à l'allumage à une valeur proche de IGA_MIN_TEG, et le reste de décélération demandée sera obtenu par une action sur d'autres paramètres moteurs tels que la coupure d'injection de carburant dans un cylindre etc.

Le procédé est naturellement itératif. Comme on l'a dit, à titre d'exemple, si le conducteur lève le pied de l'accélérateur et en l'absence d'autres demandes de couple, le calculateur va ramener l'avance à la valeur IGA_MIN quelques secondes, puis, selon l'évolution mesurée ou modélisée de la valeur de température en entrée de tubulure, va ensuite choisir une valeur décalée IGA_MIN_TEG aussi longtemps que nécessaire pour faire redescendre la température de la tubulure.

Cette situation est illustrée par la figure 3. A titre d'exemple, on, admet que la température maximale à ne pas dépasser est de 850° en entrée de tubulure. Dans ce cas, l'angle d'avance est maintenu sur la courbe MIN jusqu'à atteindre un point de température mesurée 840° (ou une valeur tenant compte d'un seuil prédéterminé), puis ramenée sur une courbe MIN_TEG tant que la température en entrée de tubulure reste voisine de 850°. Ensuite, des sauts successifs entre les courbes MIN TEG et MIN seront provoqués selon le suivi de température mesurée.

L'angle d'avance à l'allumage minimum prenant en compte la température de tubulure (IGA_MIN_TEG) et la courbe MIN_TEG associée sont calculés par un processus d'adaptation dès que l'angle d'avance employé est situé sur la courbe MIN_TEG. Ce processus d'adaptation analyse le gradient de la température TEG et ajuste la valeur IGA_MIN_TEG pour que ce gradient soit maintenu à une valeur négative. De ce fait, lorsque l'avance à l'allumage est égale à IGA_MIN_TEG, la température de tubulure décroit pour permettre de repasser à l'avance IGA_MIN. Si le gradient de la température TEG est positif ou même nul, c'est à dire que la température TEG continue à croitre ou reste stable, alors, la courbe MIN_TEG et par voie de conséquence la valeur d'avance IGA_MIN_TEG, sont modifiées dans le sens d'une avance augmentée (la courbe MIN_TEG s'écarte de la courbe MIN) jusqu'à ce que la température TEG diminue. La nouvelle valeur de l'avance IGA_MIN_TEG est alors mémorisée pour être employée en tant que valeur initiale lors du prochain saut entre la courbe MIN et la courbe MIN_TEG.

Lorsque la température de tubulure ne permet plus de maintenir l'avance à l'allumage à la valeur d'angle calé (MIN), l'information d'angle effectivement choisi est utilisée par le calculateur dans l'étape E3 pour modifier d'autres paramètres d'action sur le moteur (papillon, injection).

Le procédé selon l'invention est destiné à être mis en oeuvre par un calculateur de paramètres moteur, déjà généralement présent dans les véhicules automobiles, et de nature et structure considérées ici comme connues en soi.

Il est clair que le choix de la température d'entrée de tubulure comme paramètre à surveiller est uniquement un exemple. On pourrait tout aussi bien décider de piloter l'avance à l'allumage selon tout autre paramètre pertinent.

De même, le paramètre à surveiller (température ou autre) peut naturellement être soit directement mesuré par un capteur ad hoc, soit être modélisé par le calculateur moteur, selon d'autres informations de fonctionnement moteurs telles que le temps d'admission, la température d'admission, la pression d'admission, la quantité d'air dans les pistons, l'avance à l'allumage etc.

Il en est de même pour la demande de couple moteur qui est soit mesurée, soit également modélisée selon la position de pédale d'accélérateur, et d'autres paramètres du véhicule.

Dans une variante de mise en oeuvre, on utilise une variable intermédiaire TEG_HYS au lieu de la variable TEG de température des gaz d'échappement, de manière à tenir compte entre autres de l'inertie thermique du catalyseur. Cette variable représente la température des gaz à laquelle on ajoute un hystérésis. Ceci permet d'anticiper une surchauffe du système d'échappement (catalyseur en particulier) en réduisant le temps pendant lequel l'avance peut rester maintenue au niveau calé IGA_MIN.

Quand la température TEG dans la tubulure d'échappement augmente, la variable TEG_HYS atteint plus tôt le seuil de changement de réglage d'avance. Par contre, lorsque la température diminue, la variable TEG_HYS maintient plus tard une valeur obligeant le calculateur à laisser l'avance au dessus de l'avance minimale IGA_MIN. Ceci permet un meilleur refroidissement de la tubulure d'échappement. On obtient alors une courbe d'évolution de température et d'avance à l'allumage plus proche de la courbe de la figure 4 (à comparer à la figure 3).

On a bien compris que l'utilisation de la marge d'avance à l'allumage précédemment inutilisée est nouvelle et réalisable grâce au suivi de paramètres moteurs critiques et à la prise en compte suivie de la demande de couple.

## Revendications

1. Procédé de contrôle de moteur d'automobile selon sa température de tubulure d'échappement, du type comportant des étapes de détermination d'un angle minimum d'avance à l'allumage parmi plusieurs valeurs possibles comprenant un angle de régime calé (MIN, MINTEG), en fonction d'une logique prédéterminée et de paramètres de fonctionnement du moteur, **caractérisé en ce que** il comporte une étape dans laquelle l'angle d'avance à l'allumage (IGA) est ramené à un angle d'avance calé (IGA_MIN), pendant une période qui dure aussi longtemps que la température (TEG) en entrée de la tubulure d'échappement ne dépasse pas un seuil donné, et, dès lors que la température (TEG) est supérieure à une certaine valeur seuil, l'angle d'avance à l'allumage (IGA) est amené à une seconde valeur (IGA_MIN_TEG) prenant en compte la température d'échappement (TEG).

2. Procédé selon la revendication 1, **caractérisé en ce qu'**il comporte au moins les étapes suivantes :
E1 calcul d'une valeur de l'angle d'avance à l'allumage minimum (IGA_MIN), selon les paramètres de fonctionnement du moteur à cet instant, et calcul d'une valeur d'angle d'avance à l'allumage (IGA_MIN_TEG) qui tient compte de la température d'échappement,
E2 détermination de la température (TEG) dans la tubulure,
E3 détermination de la demande de couple,
E4 choix des paramètres moteurs à modifier selon la demande de couple et choix de la valeur minimale d'angle d'avance à l'allumage (IGA) utilisable à cet instant.

3. Procédé selon la revendication précédente, **caractérisé en ce que** le calcul de la valeur d'angle d'avance à l'allumage (IGA_MIN_TEG) qui tient compte de la température d'échappement comporte un processus d'adaptation apte à modifier ladite valeur de manière à ce que le gradient de ladite température d'échappement (TEG) soit négatif lorsque ladite valeur d'angle d'avance à l'allumage (IGA_MIN_TEG) est employée.

4. Procédé selon l'une quelconque des revendications précédentes, **caractérisé en ce que** la détermination de la température dans la tubulure est réalisée par mesure directe.

5. Procédé selon l'une quelconque des revendications précédentes, **caractérisé en ce que** la détermination de la température dans la tubulure est réalisée par modélisation.

6. Procédé selon la revendication 2, **caractérisé en ce que** dans l'étape E4 de choix des paramètres moteurs à modifier, il comporte un choix préférentiel de modification d'avance à l'allumage, et, lorsque la température d'échappement (TEG) dépasse une valeur déterminée, une modification des valeurs de réglage d'injection et papillon.

7. Procédé selon l'une quelconque des revendications 1 à 6, **caractérisé en ce que** le procédé est itératif.

8. Procédé selon l'une quelconque des revendications 1 à 7, **caractérisé en ce que** on utilise une variable intermédiaire (TEG_HYS) au lieu de la variable (TEG) de température des gaz d'échappement, cette variable intermédiaire comportant un hystérésis par rapport à la température (TEG), autour d'une valeur prédéterminée.

## Claims

1. Method for controlling a motor vehicle engine according to the temperature of its exhaust pipe, of the type comprising stages for determining a minimum ignition advance angle from amongst a plurality of possible values including a set speed angle (MIN, MINTEG), as a function of predetermined logic and operating parameters of the engine, **characterized in that** it comprises a stage in which the ignition advance angle (IGA) is brought to a set advance angle (IGA _MIN) for a period which lasts as long as the temperature (TEG) at the inlet of the exhaust pipe does not exceed a given threshold and, from the point when the temperature (TEG) is greater than a certain threshold value, the ignition advance angle (IGA) is brought to a second value (IGA_MIN_TEG) taking account of the exhaust temperature (TEG).

2. Method according to claim 1, **characterized in that** it comprises at least the following stages:
E1 computation of a value for the minimum ignition advance angle (IGA_MIN) according to the operating parameters of the engine at that moment and computation of an ignition advance angle value (IGA_MIN_TEG) which takes account of the exhaust temperature,
E2 determination of the temperature (TEG) in the pipe,
E3 determination of the demand for torque,
E4 selection of the engine parameters to be modified according to the demand for torque and selection of the minimum value of ignition advance angle (IGA) which can be used at that moment.

3. Method according to the previous claim, **characterized in that** the computation of the ignition advance angle value (IGA_MIN_TEG) which takes account of the exhaust temperature comprises a process of adaptation suitable for modifying said value in such a way that the gradient of said exhaust temperature (TEG) is negative when said ignition advance angle value (IGA_MIN_TEG) is employed.

4. Method according to any of the previous claims, **characterized in that** the temperature in the pipe is determined by way of direct measurement.

5. Method according to any of the previous claims, **characterized in that** the temperature in the pipe is determined by way of modelling.

6. Method according to claim 2, **characterized in that** the stage E4 for selection of the engine parameters to be modified comprises preferential selection of modification of the ignition advance and, when the exhaust temperature (TEG) exceeds a predefined value, modification of the values for regulating injection and throttle.

7. Method according to any of claims 1 to 6, **characterized in that** the method is iterative.

8. Method according to any of claims 1 to 7, **characterized in that** an intermediate variable (TEG_HYS) is used instead of the variable (TEG) of the temperature of the exhaust gases, this intermediate variable comprising hysteresis with respect to the temperature (TEG), around a predetermined value.

## Patentansprüche

1. Verfahren zum Steuern eines Kraftfahrzeugmotors gemäß seiner Abgastemperatur, umfassend Schritte zum Bestimmen eines minimalen Zündwinkels unter mehreren möglichen Werten, die einen Nullleistungs-Zündwinkel (MIN, MINTEG) umfassen, in Abhängigkeit einer vorgegebenen Logik und Betriebsparametern des Motors, **dadurch gekennzeichnet, dass** es einen Schritt umfasst, in dem der Zündwinkel (IGA) auf einen Nullleistungs-Zündwinkel (IGA_MIN) verringert wird, während einer Zeitspanne, die so lange dauert, dass die Temperatur (TEG) am Eingang des Abgasrohrs eine gegebene Schwelle nicht überschreitet, und, sobald die Temperatur (TEG) über einem bestimmten Schwellenwert liegt, der Zündwinkel (IGA) auf einen zweiten Wert (IGA_MIN_TEG) gebracht wird, der die Abgastemperatur (TEG) berücksichtigt.

2. Verfahren nach Anspruch 1, **dadurch gekennzeichnet, dass** es zumindest die folgenden Schritte umfasst:
E1 Berechnen eines minimalen Zündwinkelwerts (IGA_MIN) gemäß den Betriebsparametern des Motors zu diesem Zeitpunkt, und Berechnen eines Zündwinkelwerts (IGA_MIN_TEG), der die Abgastemperatur berücksichtigt,
E2 Bestimmen der Temperatur (TEG) in dem Abgasrohr,
E3 Bestimmen der Drehmomentanforderung,
E4 Auswählen der zu verändernden Motorparameter in Abhängigkeit von der Drehmomentanforderung und Auswählen des minimalen Zündwinkelwerts (IGA), der zu diesem Zeitpunkt anwendbar ist.

3. Verfahren nach dem vorhergehenden Anspruch, **dadurch gekennzeichnet, dass** das Berechnen des Zündwinkelwerts (IGA_MIN_TEG), der die Abgastemperatur berücksichtigt, ein Anpassungsverfahren umfasst, das dazu geeignet ist, den Wert so zu verändern, dass das Gefälle der Abgastemperatur (TEG) negativ ist, wenn der Zündwinkelwert (IGA_MIN_TEG) angewandt wird.

4. Verfahren nach einem der vorhergehenden Ansprüche, **dadurch gekennzeichnet, dass** das Bestimmen der Temperatur in dem Abgasrohr durch unmittelbare Messung erfolgt.

5. Verfahren nach einem der vorhergehenden Ansprüche, **dadurch gekennzeichnet, dass** das Bestimmen der Temperatur in dem Abgasrohr durch Modellierung erfolgt.

6. Verfahren nach Anspruch 2, **dadurch gekennzeichnet, dass** in Schritt E4 des Auswählens der zu verändernden Motorparameter es vorzugsweise ein Auswählen der Veränderung des Zündwinkels umfasst und, wenn die Abgastemperatur (TEG) einen vorgegebenen Wert überschreitet, eine Veränderung der Stellwerte der Einspritzung und der Drosselklappe.

7. Verfahren nach einem der Ansprüche 1 bis 6, **dadurch gekennzeichnet, dass** das Verfahren sich wiederholt.

8. Verfahren nach einem der Ansprüche 1 bis 7, **dadurch gekennzeichnet, dass** anstelle der Variablen (TEG) der Temperatur der Abgase eine Zwischenvariable (TEG_HYS) verwendet wird, wobei diese Zwischenvariable eine Hysterese im Verhältnis zur Temperatur (TEG) umfasst, die um einen vorgegebenen Wert herumliegt.
